# EUROPEAN PATENT APPLICATION

(11) **EP 3 885 094 A1**
(43) Date of publication of application: **29.09.2021**
(21) Application number: 19888003.1
(22) Date of filing: 19.11.2019
(51) Int. Cl.: B29B 9/14, B29C 45/00, C08J 5/08

(54) **FIBER-REINFORCED RESIN PELLET, MIXED PELLET, AND INJECTION MOLDED ARTICLE**

(30) Priority: 19.11.2018 JP 2018216686
(71) Applicant: Idemitsu Kosan Co., Ltd., Chiyoda-ku Tokyo 100-8321 (JP)
(72) Inventor: YASUDA, Hiroshi, Chiba 299-0193 (JP)
(74) Representative: Gille Hrabal Partnerschaftsgesellschaft mbB Patentanwälte
(86) International application number: PCT/JP2019/045174
(87) International publication number: WO 2020/105607

(57) **Abstract**

A fiber-reinforced resin pellet comprising a thermoplastic resin (A) containing crystalline polystyrene having a syndiotactic structure, and glass fibers (B) having a number-average fiber length of 1 mm or more and 7 mm or less; a mixed pellet obtained by blending a thermoplastic resin pellet with the fiber-reinforced resin pellet; and an injection-molded article obtained by injection molding the fiber-reinforced resin pellet or the mixed pellet.

## Description

### Technical Field

The invention relates to a fiber-reinforced resin pellet, a mixed pellet and an injection-molded article, and more particularly, to a fiber-reinforced resin pellets and a mixed pellet capable of stably producing an injection-molded article having excellent impact resistance strength by reducing the influence of back pressure during injection molding, and an injection-molded article.

### Background Art

Attempts have been made to lighten automobiles by replacing the metallic components with fiber-reinforced plastic in order to improve fuel efficiency of automobiles and the like, and fiber-reinforced plastic having excellent physical properties has been demanded.

On the other hand, a technique is known in which fiber-reinforced pellets are injection-molded to produce an injection-molded article composed of a fiber-reinforced plastic (Patent Documents 1 and 2).

### Related Art Documents

### Patent Documents

[Patent Document 1] JP 2015-936 A1
[Patent Document 2] JP 2004-300293 A1

### Summary of the Invention

The inventor has intensively studied fiber-reinforced pellets containing a thermoplastic resin and glass fibers, in which the thermoplastic resin contains crystalline polystyrene having a syndiotactic structure (hereinafter, sometimes simply referred to as "SPS"). As a result, such fiber-reinforced pellets have been found to have a specific problem that the impact resistance strength of the obtained injection-molded article is destabilized by the influence of back pressure during injection molding. This makes it difficult to achieve sufficient production stability and quality stability, and application of injection-molded articles to various use is difficult due to the inclusion of inferior quality products. The prior art including Patent Documents 1 and 2 does not reveal such a problem, and does not solve such a problem.

It is therefore an object of the invention to provide fiber-reinforced resin pellets and mixed pellets capable of stably producing injection-molded articles having excellent impact resistance strength by reducing the influence of back pressure during injection molding, and injection-molded articles.

According to the invention, the following a fiber-reinforced resin pellet and the like can be provided.

1. A fiber-reinforced resin pellet comprising a thermoplastic resin (A) comprising crystalline polystyrene having a syndiotactic structure, and
   glass fibers (B) having a number-average fiber length of 1 mm or more and 7 mm or less.
2. The fiber-reinforced resin pellet according to 1, wherein a pellet length of the fiber-reinforced resin pellet is 1 mm or more and 7 mm or less.
3. The fiber-reinforced resin pellet according to 1 or 2, wherein an MFR value of the crystalline polystyrene having the syndiotactic structure contained in the thermoplastic resin (A) is 10 to 50 g/10min.
4. The fiber-reinforced resin pellet according to any one of 1 to 3, wherein the MFR value of the thermoplastic resin (A) is 10 to 50 g/10min.
5. The fiber-reinforced resin pellet according to any one of 1 to 4, wherein the content of the crystalline polystyrene having the syndiotactic structure is 20% by mass or more and 99% by mass or less, when the total amount of the thermoplastic resin (A) is 100% by mass.
6. The fiber-reinforced resin pellet according to any one of 1 to 5, wherein the thermoplastic resin (A) comprises a crystalline polystyrene having the syndiotactic structure and an acid-modified polyphenylene ether.
7. The fiber-reinforced resin pellet according to any one of 1 to 6, wherein the average fiber diameter of the glass fibers (B) is 5 µm or more and 20 µm or less.
8. The fiber-reinforced resin pellet according to any one of 1 to 7, wherein the content of the thermoplastic resin (A) is 30% by mass or more and 90% by mass or less, and the content of the glass fibers (B) is 10% by mass or more and 70% by mass or less, when the total amount of the thermoplastic resin (A) and the glass fibers (B) is 100% by mass.
9. A mixed pellet obtained by mixing a thermoplastic resin pellet into the fiber-reinforced resin pellet according to any one of 1 to 8.
10. The mixed pellet according to 9, wherein the thermoplastic resin pellet comprises at least one of crystalline polystyrene having a syndiotactic structure and polyphenylene ether.
11. An injection-molded article obtained by injection-molding the fiber-reinforced resin pellet according to any one of 1 to 8 or the mixed pellet according to 9 or 10.
12. The injection-molded article of 11, wherein the load-deflection temperature defined by ISO 75A (2004) is 260°C or higher.
13. The injection-molded article according to 11 or 12, wherein the content of the glass fibers (B) contained in the injection-molded article is 10% by mass or more and 60% by mass or less.

According to the invention, fiber-reinforced resin pellets and mixed pellets capable of stably producing injection-molded articles having excellent impact resistance strength by reducing the influence of back pressure during injection molding, and injection-molded articles can be provided.

### Brief Description of the Drawings

Fig. 1 is a schematic diagram illustrating an exemplary pellet-producing device.
Fig. 2 is a schematic illustrating an exemplary fiber-reinforced resin pellet.
Fig. 3 is a schematic diagram illustrating an automotive component.
Fig. 4 is a schematic diagram illustrating an automotive component.
Fig. 5 is a schematic diagram illustrating an automotive component.
Fig. 6 is a schematic diagram illustrating an automotive component.
Fig. 7 is a graph for explaining the results of Examples and Comparative Examples.

### Mode for Carrying out the Invention

### 1. Fiber-reinforced resin pellets

The fiber-reinforced resin pellets according to the invention contain a thermoplastic resin (A) containing SPS and glass fibers (B) having a number-average fiber length of 1 mm or more and 7 mm or less. The significance thereof will be described below.

As fiber-reinforced plastics, polypropylene (abbreviated as "PP") glass fiber-reinforced materials have been used most frequently in applications such as front-end modules and door modules. However, due to the use of polypropylene having a melting point of 160°C, such PP glass fiber-reinforced materials are not suitable for use in higher temperature environments. Therefore, it is conceivable to use fiber-reinforced materials of engineering plastics such as polyamide (abbreviation "PA"), polyphenylene sulfide (abbreviation "PPS"), or the like. However, PA-based fiber-reinforced materials have the disadvantage of fluctuating physical properties due to the effects of moisture absorption. PPS fiber-reinforced materials are hardly influenced by use environments, but have the disadvantage of low impact resistance strength. As described above, each resin serving as a base of the fiber-reinforced material has both merits and demerits. In addition, although it is conceivable to achieve both heat resistance and high impact resistance by reinforcing plastic such as PPS or the like, which are hardly influenced by use environments, with long fibers, the PPS itself is a resin having a high density, and therefore, there is a limit to the reduction in density (weight reduction).

On the other hand, the inventors have found that, by reinforcing SPS with glass fibers, excellent mechanical strength, heat resistance, appearance, and solvent resistance are imparted. Therefore, the inventors have investigated providing a low-density fiber-reinforced material having both impact resistance and high heat resistance by reinforcing the SPS with long fibers. This is considered to be a powerful measure as an alternative to metal parts used in automobiles and the like.

When an actual product is injection-molded, it is required to apply a back pressure to the melt of the pellets in order to stabilize the molding cycle. The application of the back pressure also contributes to the quality stabilization of the injection-molded articles including shape stability and weight stability. However, in this regard, the inventors have found that when such a back pressure is applied to a melt of pellets containing SPS and glass fibers, there arises a unique problem that the impact resistance property may be deteriorated depending on the fiber length of glass fiber. For this reason, fiber-reinforced resin pellets which have little influence on physical properties due to adjustment of molding conditions or the like and which can stably obtain excellent physical property is required.

The fiber-reinforced resin pellets according to one embodiment of the invention achieve the above object, and an injection-molded article having excellent impact resistance strength can be stably produced by reducing the effect of back pressure at the time of injection molding.

Although not intended to limit the invention, the reason for obtaining such an effect is presumed as follows. That is, when the number-average fiber length of glass fibers contained in the fiber-reinforced resin pellets exceeds 7 mm, the melting of the pellets during plasticizing in the molding machine is completed through the regions where the local maximum value of the viscosity is high, and then injection-molding is performed, so that the fracture condition of glass fibers is changed depending on the magnitude of the back pressure, and in particular, the impact resistance property fluctuates greatly. On the other hand, by adjusting the number-average fiber length to 7 mm or less, the local maximum value of the viscosity during plasticizing can be reduced, and thus the fracturing of glass fibers can be suppressed. As a result, the impact resistance property of the resulting injection-molded article can be stabilized. In addition, in the fiber-reinforced resin pellets of one embodiment of the invention, since the number-average fiber length of glass fibers contained in the fiber-reinforced resin pellets is 1 mm or more, the reinforcing effect of the injection-molded article by glass fibers is sufficiently exhibited, and excellent impact resistance strength is obtained.

Since the fiber-reinforced resin pellets according to one embodiment of the invention can stably produce an injection-molded article having excellent impact resistance strength by reducing the effect of back pressure during injection molding, it is remarkably excellent in applications requiring excellent impact resistance strength, or applications requiring reliability of impact resistance strength, for example, automotive components, etc. Further, the injection-molded article produced from the fiber-reinforced resin pellets according to one embodiment of the invention can exhibit such an effect while retaining good low density that contribute to weight reduction, heat resistance (high load-deflection temperature), low creep deformation, and high LLC (long life coolant) resistance.

The thermoplastic resin (A) contained in the fiber-reinforced resin pellets according to one embodiment of the invention contains crystalline polystyrene having a syndiotactic structure (SPS). The crystalline polystyrene having a syndiotactic structure is obtained, for example, by polymerizing a styrene-based monomer using a metallocene catalyst. When the thermoplastic resin (A) contains SPS, an injection-molded article having excellent impact resistance strength and low density can be obtained.

The MFR (melt mass flow rate) value of SPS is preferably 10 to 50 g/10min. Here, the MFR value is a value measured with a load of 1.20 kg at 300°C in accordance with the method of JIS K7210 (2014). The MFR value of 10 to 50 g/10min of SPS further improves the impact resistance strength of injection-molded articles.

The thermoplastic resin (A) may be composed of the above-described SPS alone, but may contain other thermoplastic resins.

As the other thermoplastic resins, resins having high affinity (also referred to as compatibility) with SPS can be preferably used. Examples of such resins include, for example, polyphenylene ether (abbreviation "PPE"), acrylonitrile/styrene copolymer (abbreviation "AS"), acrylonitrile/butadiene/styrene copolymer (abbreviation "ABS"), acrylonitrile/ethylene-propylene-diene/styrene copolymer (abbreviation "AES"), acrylonitrile/acrylate ester/styrene copolymer (abbreviation "AAS"), methyl methacrylate/butadiene/styrene copolymer (abbreviation "MBS"), styrene/butadiene copolymer (abbreviation "SBR"), styrene/butadiene styrene copolymer (abbreviation "SBS"), styrene/ethylene/butadiene/styrene copolymer (abbreviation "SEBS").

The resin exemplified as the other thermoplastic resins is preferably a modified resin, particularly an acid-modified resin. The modified resin is obtained by copolymerizing, for example, by graft polymerizing a chemical species having a modified group. To obtain an acid-modified resin, unsaturated carboxylic acids or derivatives thereof can be preferably used as a chemical species. As an example of the method of acid modification, a styrene/maleic anhydride copolymer (abbreviation "SMA") is obtained by grafting a carboxylic acid or a carboxylic anhydride to polystyrene.

As the unsaturated carboxylic acid used for acid modification, for example, compounds having a polymerizable double bond containing a carboxyl group such as maleic acid, fumaric acid, itaconic acid, acrylic acid, or methacrylic acid can be used. In addition to the carboxyl group, other functional groups such as a hydroxyl group, an amino group, and an epoxy group can be introduced into the compound as needed. Examples of the derivatives of unsaturated carboxylic acids used in acid modification include acid anhydrides of compounds described above, esters, amides, imides, and metallic salts. Specific examples thereof include maleic anhydride, itaconic anhydride, methyl acrylate, ethyl acrylate, butyl acrylate, glycidyl acrylate, methyl methacrylate, ethyl methacrylate, glycidyl methacrylate, monoethyl maleate ester, diethyl maleate ester, monomethyl fumarate ester, dimethyl fumarate ester, acrylamide, methacrylamide, maleic acid monoamide, maleic acid diamide, fumaric acid monoamide, maleimide, N-butylmaleimide, sodium methacrylate, and the like. Among them, fumaric acid and maleic anhydride are preferable.

By using a polyphenylene ether, preferably an acid-modified polyphenylene ether, as the other thermoplastic resin together with SPS, the affinity between SPS and glass fibers (B) is increased, and the impact resistance strength of the injection-molded article is further improved. As the acid-modified polyphenylene ether include maleic anhydride-modified polyphenylene ether and fumaric acid-modified polyphenylene ether, and the like are preferable.

The other thermoplastic resin is not limited to the resin having a high affinity for SPS described above, and may be a resin having low affinity depending on the purpose, application, and the like. When a resin having low affinity is used, compatibility with SPS can be increased by combining with various compatibilizers as needed. Examples of the resin having low affinity for SPS include aliphatic polyamides such as PA6, PA66; aromatic polyamides having aromatic ring in the main chain such as PA6T, PA9T; polyesters such as polyethylene terephthalate (PET), polybutylene terephthalate (PBT); polyarylene sulfides having an aryl group in the main chain; polyether sulfones having a sulfonyl bond in the main chain; polyether ether ketones (PEEK) having a ketone group in the main chain; and polyolefins (or olefinic elastomers) such as polypropylene (PP), high-density polyethylene (HDPE), linear low-density polyethylene (abbreviation "LLDPE"), ethylene-butene copolymers (abbreviation "EBR"), ethylene octene copolymers (abbreviation "EOR"), ethylene hexene copolymers (abbreviation "EHR"), ethylene propylene copolymers (abbreviation "EPR").

The other thermoplastic resins described above may be used alone in one kind, or in combination with two or more kinds thereof.

When the other thermoplastic resins are used together with SPS, the MFR value of the thermoplastic resin (A) constituted by these resins (MFR value of the entire thermoplastic resin (A)) is preferably 10 to 50 g/10min. Again, the MFR value is a value measured with a load of 1.20 kg at 300°C, in accordance with the method of JIS K7210 (2014). When no other thermoplastic resin is used, the MFR value of SPS corresponds to the MFR value of the thermoplastic resin (A). When the MFR value of the thermoplastic resin (A) is 10 to 50 g/10min, the impact resistance strength of the injection-molded article is further improved.

The content of SPS is preferably 20% by mass or more and 99% by mass or less, where the total amount of the thermoplastic resin (A) is 100% by mass. When the content of SPS is 20% by mass or more, 40% by mass or more, 60% by mass or more, 80% by mass or more, 90% by mass or more, or even 95% by mass or more, excellent impact resistance strength is imparted into molded products, preferably injection-molded articles, produced using the fiber-reinforced resin pellets as raw material. Further, when the content of SPS is 99% by mass or less, 98% by mass or less, or even 97% by mass or less, an effect derived from the other thermoplastic resin, for example, an effect of improving the affinity between SPS and glass fibers (B), and the like can be well exhibited.

As described above, the number-average fiber length of glass fibers (B) is 1 mm or more and 7 mm or less. As used herein, the "number-average fiber length" is a number-average value of fiber lengths of glass fibers (B) contained in fiber-reinforced resin pellets.

The lower limit of the number-average fiber length of glass fibers (B) may be 1 mm or more, and from the viewpoint of better exhibiting the effects of the invention, for example, the lower limit of the number-average fiber length of glass fibers (B) may be 2.0 mm or more, 2.5 mm or more, 3 mm or more, or even 3.5 mm or more. Further, the upper limit of the number-average fiber length of glass fibers (B) may be 7 mm or less, and from the viewpoint of better exhibiting the effects of the invention, for example, the upper limit of the number-average fiber length of glass fibers (B) may be 6 mm or less, 5 mm or less, or even 4.5 mm or less.

The average fiber diameter of glass fibers (B) is preferably 5 µm or more and 20 µm or less. By having an average fiber diameter of 5 µm or more, a thermoplastic resin (A) easily enters between glass fibers (B), and the grass fibers (B) can be sufficiently impregnated with a resin. In addition, fracturing of glass fibers (B) in the producing process is suitably prevented, and productivity can be improved. Further, when the average fiber diameter is 20 µm or less, the effect of excellent Charpy impact resistance strength is obtained.

As a method for measuring the number-average fiber length and the average fiber diameter of glass fibers (B) described above, a method in which a resin is burned off in a temperature range in which glass fibers do not oxidize and lose weight, and the fibers are fractionated and measured by microscopic observation (baking method) is used. As for the number-average fiber length, specifically, first, a crucible containing pellets is placed in a muffle furnace, and the crucible is baked until components other than glass fibers (B) are completely ashed. The lumps of glass fibers (B) are then loosened and dispersed. Silicon oil is then added and glass fibers (B) are dispersed in the silicon oil. Then, silicon oil in which glass fibers (B) are dispersed is dropped onto a slide glass, covered with a covering glass, and observed using a digital microscope ("KH-7700" manufactured by HIROX Co.,Ltd.) at a magnification of 40 times. The fiber length is measured for 500 of glass fibers (B), and the number-average fiber length of glass fibers (B) is determined. With respect to the average fiber diameter, the fiber diameter is measured for 500 of glass fibers (B) observed in the same manner as in the number-average fiber length, and the average fiber diameter of glass fibers (B) is determined. The average fiber diameter is obtained by measuring the diameter when the cross section of the fiber is circular, and the longest portion when the cross section of the fiber is in any other shape (e.g., elliptical shape, flat shape, etc.).

The material of glass fibers (B) is not particularly limited, and for example, glass fibers of various compositions such as E glass, low dielectric glass, silica glass, and the like can be selected and used depending on the purpose and application. Among them, E glass is preferably used.

As glass fibers (B), it is preferable to use glass fibers having a tensile strength of 3 to 5 GPa. It is also preferable to use glass fibers having a linear expansion coefficient of 2.8×10⁻⁶ to 5.6×10⁻⁶ (/°C) as glass fibers (B). In a preferred embodiment, glass fibers having a tensile strength of 3 to 5 GPa and a linear expansion coefficient of 2.8×10⁻⁶ to 5.6×10⁻⁶ (/°C) can be used.

In addition, it is preferable that the TEX number of glass fibers (B) be 1000 to 4000TEX, 1500 to 3300TEX, 2000 to 2800TEX, and even 2200 to 2600TEX. The TEX number corresponds to the number of grams per km of fiber.

The content of the thermoplastic resin (A) is preferably 30% by mass or more and 90% by mass or less, and the content of the glass fibers (B) is preferably 10% by mass or more and 70% by mass or less, where the total amount of the thermoplastic resin (A) and glass fibers (B) is set to 100% by mass. Thus, the injection-molded article is further imparted with excellent impact resistance strength, and the influence of the back pressure is further reduced. From the viewpoint of further exhibiting such effects, it is more preferable that the content of the thermoplastic resin (A) is 35% by mass or more and 80% by mass or less, and the content of the glass fibers (B) is 20% by mass or more and 65% by mass or less, and still more preferable that the content of the thermoplastic resin (A) is 40% by mass or more and 60% by mass or less, and the content of the glass fibers (B) is 40% by mass or more and 60% by mass or less. Further, it is most preferable that the content of the thermoplastic resin (A) is 45% by mass or more and 55% by mass or less, and the content of the glass fibers (B) are 45% by mass or more and 55% by mass or less.

The fiber-reinforced resin pellets may contain other components (C) other than the thermoplastic resin (A) and glass fibers (B) described above within a range not impairing the effects of the invention. Examples of the other component (C) include various additives. The additive is not particularly limited, and examples thereof include additives for resins such as antioxidants, weathering agents, antistatic agents, pigments, flame retardants, radical generators, compatibilizers, and the like. The content of the additives is not particularly limited, and the additives may be added as necessary. For example, the content of the additives is preferably 10% by mass or less, 5% by mass or less, 3% by mass or less, or even 1 % by mass or less, where the total amount of the fiber-reinforced resin pellets is set to 100% by mass. The additive may be mixed into the thermoplastic resin (A) and used. Incidentally, the fiber-reinforced resin pellets may contain reinforcing fibers other than the glass fibers (B) as the above additive, as long as the effects of the invention is not impaired, but preferably do not contain the reinforcing fibers other than the glass fibers (B).

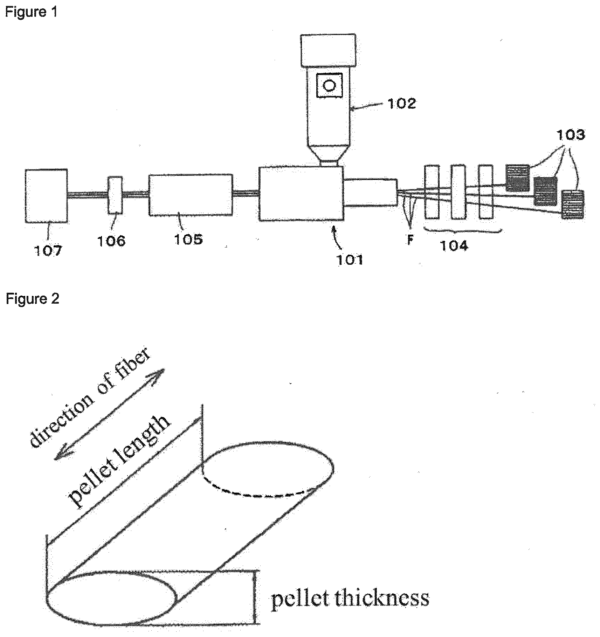

As a method for producing the fiber-reinforced resin pellets, for example, a pultrusion method which is a method of producing general long fiber pellets can be preferably used. The pultrusion method will be described with reference to Fig. 1.

Fig. 1 is a schematic diagram illustrating an exemplary pellet-producing device for carrying out the pultrusion method. In Fig. 1, reference numeral 101 represents a die; 102 resprsents an extruder for supplying a molten thermoplastic resin (A) to the die 101; 103 represents a roll of a bundle (also referred to as "roving") F of glass fibers (B); 104 represents a group of tension rolls for applying a constant tension to the bundle F of glass fibers drawn into the die 101; 105 represents a cooling unit for cooling a molten resin-impregnated fiber bundle drawn from the die 101; 106 represents a drawing roll of the bundle of fibers; and 107 represents a pelletizer for cutting the drawn molten resin-impregnated fiber bundle into fiber-reinforced resin pellets. In this device, three independent bundles F of glass fibers (B) are simultaneously impregnated with molten resin.

The bundle F of glass fibers (B) is impregnated with a thermoplastic molten resin (A) melted in the die 101. Thereafter, the fiber bundle impregnated with the molten resin is cut in the pelletizer 107 to obtain fiber-reinforced resin pellets having a predetermined pellet length.

Fig. 2 is a schematic illustrating an exemplary fiber-reinforced resin pellet. As shown in Fig. 2, the pellet length corresponds to the length in the longitudinal direction of the fiber-reinforced resin pellet. On the other hand, the pellet thickness corresponds to the diameter if the shape of the fiber-reinforced resin pellet in the cross section orthogonal to the longitudinal direction is a circular shape, and corresponds to the thickness of the thinnest portion if the shape of the fiber-reinforced resin pellet in the cross section orthogonal to the longitudinal direction is a non-circular shape such as an elliptical shape, for example. In the fiber-reinforced resin pellets produced by the pull-out molding method as described above, as shown in FIG. 2, the orientation direction of glass fibers (B) is parallel to the longitudinal direction of the pellets, and the number-average fiber length of glass fibers (B) is substantially equal to the pellet length. Therefore, when the number-average fiber length of glass fibers (B) is a specific value in the range of 1 mm or more and 7 mm or less, the pellet length can be the same specific value in the range of 1 mm or more and 7 mm or less. Therefore, in the pultrusion method, the number-average fiber length can be set (controlled) by setting the pellet length.

The method for producing the fiber-reinforced resin pellets is not limited to the above-described pull-out molding method, and any method may be used as long as the number-average fiber length of glass fibers (B) can be 1mm or more and 7mm or less. For example, a thermoplastic resin (A) and glass fibers (B) having a form of a chopped strand cut to a predetermined length in advance, for example, may be kneaded using a kneader such as a twin-screw kneader to produce fiber-reinforced resin pellets. In the fiber-reinforced resin pellets produced through such kneading, the number-average fiber length of glass fibers (B) is not necessarily equal to the pellet length of the fiber-reinforced resin pellets, and is usually shorter than the pellet length.

The pellet length of the fiber-reinforced resin pellet is not particularly limited as long as the pellet can contain glass fibers having a number-average fiber length of 1 mm or more and 7 mm or less. The pellet length may be, for example, 15 mm or less, 12 mm or less, 8 mm or less, 7 mm or less, 5 mm or less, or even 4.5 mm or less. Further, the pellet length may be, for example, 1 mm or more, 2 mm or more, 3 mm or more, or even 3.5 mm or more. In an aspect, particularly when the fiber-reinforced resin pellets are molded by the above-described pultrusion method, the pellet length of the fiber-reinforced resin pellets is preferably 1 mm or more and 7 mm or less, and is preferably equal to the number-average fiber length of glass fibers (B).

The pellet thickness of the fiber-reinforced resin pellets is not particularly limited. The pellet thickness may be, for example, 5 mm or less, 4 mm or less, 3 mm or less, and 2.5 mm or less. Further, the pellet depth may be, for example, 0.5 mm or more, 1 mm or more, 1.2 mm or more, even 1.5 mm or more.

### 2. Mixed pellets

The mixed pellets according to one embodiment of the invention is obtained by mixing the fiber-reinforced resin pellets described above with thermoplastic resin pellets. Here, the thermoplastic resin constituting the thermoplastic resin pellets is not particularly limited, but preferably contains at least one of SPS and polyphenylene ether. Thus, the affinity between the thermoplastic resin pellets and the fiber-reinforced resin pellets is increased, and the impact resistance strength is further improved.

In the mixed pellets, the thermoplastic resin pellets can be used to dilute glass fibers (B) derived from the fiber-reinforced resin pellets. From the viewpoint of suitably performing such dilution, it is preferable that the thermoplastic resin pellets do not contain reinforcing fibers such as glass fibers (B), carbon fibers, and the like. Alternatively, when the thermoplastic resin pellets contain reinforced fibers, it is preferable that the content of the reinforced fibers be smaller than the content of the reinforced fibers in the fiber-reinforced resin pellets, e.g., the content of the reinforced fibers is preferably 80% by mass or less, 50% by mass or less, 20% by mass or less, 10% by mass or less, or even 5% by mass or less of the content of reinforcing fibers in the fiber-reinforced resin pellets. In addition, when the thermoplastic resin pellets contain reinforcing fibers, the form of the reinforcing fibers is not particularly limited, and may be, for example, in the form of fibers having a fiber length equal to the pellet length (so-called "long fibers"), or in the form of fibers having a fiber length shorter than the pellet length (so-called "short fibers"). A thermoplastic resin pellet containing long fibers can be produced, for example, by the above-described pultrusion molding method or the like. On the other hand, a thermoplastic resin pellet containing short fibers can be produced, for example, by a method using a kneader described above or the like.

The shape of the thermoplastic resin pellet (pellet length, pellet thickness, etc.) is not particularly limited and can be appropriately set. In an aspect, the thermoplastic resin pellet may have the same pellet length, pellet thickness, or the like as the fiber-reinforced resin pellet.

### 3. Injection-molded article

An injection-molded article according to one embodiment of the invention (hereinafter, simply referred to as an "injection-molded article") is formed by injection molding the fiber-reinforced resin pellets described above or the mixed pellets described above.

Such an injection-molded article stably exhibits an effect of having excellent impact resistance strength. The method and conditions of injection molding of the injection-molded article are not particularly limited, and can be carried out by known methods and conditions. In injection molding, a back pressure may or may not be applied to the melted pellets (fiber-reinforced resin pellets or mixed pellets). When the back pressure is applied, the value of the back pressure is not particularly limited, and for example, the value of the back pressure can be set to be 0.3 MPa or more and 5 MPa or less. By using the pellets according to the invention, an injection-molded article having excellent impact resistance strength regardless of the presence or absence of back pressure or the magnitude of back pressure can be obtained stably. In addition, even when the back pressure actually applied to the melted pellets fluctuates due to some factor, an injection-molded article having excellent impact resistance strength can be obtained stably.

The injection-molded article preferably has a load-deflection temperature of 260°C or higher as defined by ISO 75A (2004). From the viewpoint of better exhibiting the effects of the invention, the load-deflection temperature is preferably, for example, 261°C or more, 262°C or more, and even 263°C or more. The upper limit of load-deflection temperature is not particularly limited and may be 300°C or less, 290°C or less, 280°C or less, and even 270°C or less.

In addition, in the injection-molded article, it is preferable that glass fibers (B) contained in the injection-molded article is 10% by mass or more and 60% by mass or less. The content of the glass fibers (B) is preferably 12% by mass or more, 14% by mass or more, 16% by mass or more, and even 18% by mass or more in terms of better exhibiting the effects of the invention, for example, and is preferably 50% by mass or less, 45% by mass or less, 40% by mass or less, and even 35% by mass or less.

### 4. Application

The application of the injection-molded article described above is not particularly limited and can be used for various applications. In particular, since the injection-molded article stably has excellent impact resistance strength regardless of fluctuations in molding conditions (back pressure) at the time of injection molding, the injection-molded article is widely and suitably used for various applications including applications requiring high safety such as automotive components and the like.

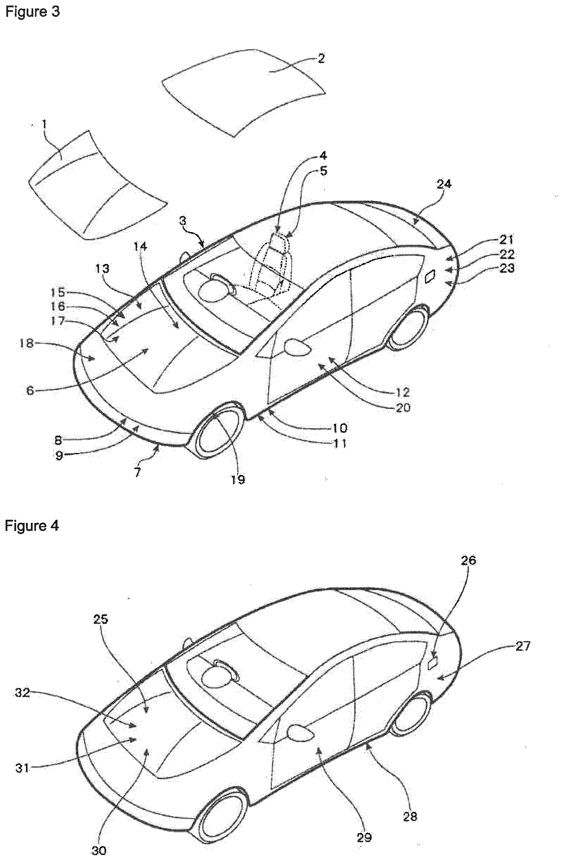

Examples of an automotive component composed of an injection-molded article will be described with reference to Figs. 3 to 6. In the case of an automobile, position in which the automotive components are provided is not necessarily limited to the cases shown in Figs. 3 to 6.

As shown in Fig. 3, the injection-molded article may suitably constitute, for example, a hood 1, a roof 2, a door frame pillar 3, a seat back 4, a headrest support 5, an engine component 6, a crash box 7, a front floor tunnel 8, a front floor panel 9, an undercover 10, an undersupport rod 11, an impact beam 12, a fender support 13, a front cowl 14, a front engine cover 15, a front strut tower bar 16, a mission center tunnel 17, a radiant core support 18, a front dash 19, a door inner 20, a rear luggage back panel 21, a rear luggage side panel 22, a rear luggage floor 23, a rear luggage partition 24, and the like.

Also shown in Fig. 4, the injection-molded article may suitably constitute, for example, a power electronic unit 25, a quick charge plug 26, an in-vehicle charger 27, a lithium-ion battery 28, a battery control unit 29, a power electronic control unit 30, a three-phase synchronous motor 31, a home charge plug 32, and the like.

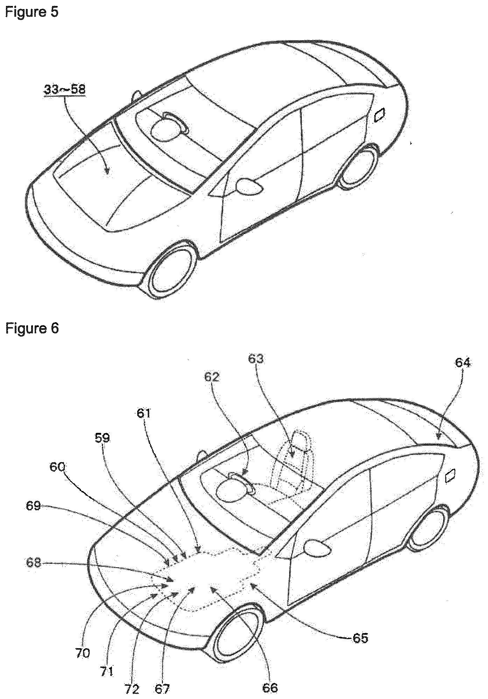

Further, as shown in Fig. 5, the injection-molded article suitably constitute, for example, a solar twilight sensor 33, an alternator 34, an EDU (electronic injector driver unit) 35, an electrons throttle 36, a tumble control valve 37, a throttle opening sensor 38, a radiator fan controller 39, a stick coil 40, an A/C pipe joint 41, a diesel particulate trapping filter 42, a headlight reflector 43, a charge air duct 44, a charge air cooling head 45, an intake air temperature sensor 46, a gasoline fuel pressure sensor 47, a cam/crank position sensor 48, a combination valve 49, an engine oil pressure sensor 50, a transmission gear angle sensor 51, a continuously variable transmission oil pressure sensor 52, an ELCM (evaporative check module) pump 53, a water pump impeller 54, a steering roll connector 55, an ECU (engine computer unit) connector 56, an ABS (anti-lock brake system) reservoir piston 57, an actuator cover 58, and the like.

Further, as shown in Fig. 6, the injection-molded article is also suitably used as a sealing material for sealing a sensor provided in the in-vehicle sensor module, for example. Such sensors are not particularly limited and include, for example, an atmospheric pressure sensor 59 (e.g., for altitude correction), a boost pressure sensor 60 (e.g., for fuel injection control), an (ICized) atmospheric pressure sensor 61, an acceleration sensor 62 (e.g., for air bag), a gauge pressure sensor 63 (e.g., for sheet condition control), a tank internal pressure sensor 64 (e.g., for fuel tank leak detection), a refrigerant pressure sensor 65 (e.g., for air conditioning control), a coil driver 66 (e.g., for ignition coil control), an EGR (exhaust recirculation) valve sensor 67, an air flow sensor 68 (e.g., for fuel injection control), an intake manifold pipe pressure (MAP) sensor 69 (e.g., for fuel injection control), an oil pan 70, a radiator cap 71, an intake manifold 72, and the like.

Automotive components constituted by the injection-molded article are not limited to those exemplified with reference to Figs. 3 to 6, and are suitably used for, for example, a high voltage (harness) connector, a millimeter-wave radome, an IGBT (insulated gate bipolar transistor) housing, a battery fuse terminal, a radiator grill, a meter hood, an inverter cooling water pump, a battery monitoring unit, a structural component, an intake manifold, a high voltage connector, a motor control ECU (engine computer unit), inverters, a piping component, a canister purge valve, a power unit, a busbar, a motor reducer, a canister, and the like.

The injection-molded article is also suitably used for motorcycle components, bicycle components, and more specifically, a motorbike component, a motorcycle cowl, and the like.

The injection-molded article can also be used for various electric appliances because of their excellent chemical resistance. For example, it is also preferable to constitute components of a natural refrigerant heat pump water heater known as a so-called "Eco Cute (a registered trade mark)" or the like, specifically. Such components include, for example, a shower component, a pump component, a piping component, and the like, and more specifically, an one-port circulating connection fitting, a relief valve, a mixing valve unit, a heat resistance trap, a pump casing, a complex water valve, a water-inlet fitting, a resin fittings, a piping component, a resin pressure reducing valve, an elbow for a water tap, and the like.

The injection-molded article is also suitably used in home appliance applications, electronic appliances, and more specifically, a microwave oven, a telephone, a cellular phone, a refrigerator, a vacuum cleaner, an OA appliance, an electric tool component, an electrical component application, a static electricity prevention, a high-frequency electrons component, a highly exothermic electronic component, a high-voltage part, an electromagnetic wave shielding part, telecommunications equipment, an audio-visual appliance, a personal computer, a register, a fan, a ventilating fan, a sewing machine, an ink peripheral component, a ribbon cassette, an air cleaner component, a warm water washing toilet seat component, a toilet seat, a toilet cover, a rice cooker component, an optical pick-up appliance, a component for lighting equipment, a DVD, a DVD-RAM, a DVD pickup component, a DVD pickup substrate, a switch component, a socket, a display, a video camera, a filament, a plug, a high-speed color copier (a laser printer), an inverter, an air conditioner, a keyboard, a converter, a television, a facsimile, an optical connector, a semiconductor chip, an LED component, a washing machine and a dryer component, and a component for dishwasher and a dish dryer, and the like.

The injection-molded article is also suitably used in building materials, and more specifically include an outer wall panel, a back panel, a partition wall panel, a signal light, an emergency light, a wall material, and the like.

The injection-molded article is also suitably used for miscellaneous goods, daily necessities, and the like, and more specifically include chopsticks, a lunch box, a tableware container, a food tray, a food packaging material, a water tank, a tank, a toy, a sporting good, a surfboard, a door cap, a door step, a pachinko machine component, a remote control car, a remote control case, a stationery, a musical instrument, a tumbler, a dumbbell, a helmet box product, and the like.

Each of the various components described above may be partially or entirely constituted by the injection-molded article.

### Examples

Hereinafter, Examples of the invention will be described in more detail, but the invention is not limited to these Examples.

### 1. Examples 1, 2 and Comparative Examples 1, 2

### [Fiber-reinforced resin pellets]

### (1) Preparation of the base resin composition

SPS ("ZAREC 300ZC" manufactured by Idemitsu Kosan Co.,Ltd., MFR value: 30 g/10min) 95.7% by mass, acid-modified polyphenylene ether ("CX-1" manufactured by Idemitsu Kosan Co.,Ltd.; fumaric acid-modified) 3.5% by mass, and an antioxidant ("Irganox1010" manufactured by BASF Japan Co., Ltd.) 0.8% by mass were mixed to obtain a base resin composition. Here, when the total amount of the thermoplastic resin (A) constituting the base resin composition is set to 100% by mass, the content of SPS is 96.5% by mass and the content of acid-modified polyphenylene ether is 3.5% by mass.

### (2) Molding of fiber-reinforced resin pellets

The base resin composition obtained above and a bundle of glass fibers ("RS240QR-483" manufactured by Nitto Boseki Co., Ltd., a glass roving of 2400TEX surface-treated with aminosilane having an average fiber diameter of 17 µm) were supplied to the same pellet-producing apparatus as shown in Fig. 1 to produce fiber-reinforced resin pellets. Specifically, under the pellet molding conditions described below, glass fibers were fed into the die while adjusting the amount of the bundle of fibers by the tension rolls, and the molten thermoplastic resin was impregnated, and then pulled out from the die and cooled, and cut by a pelletizer so as to have a pellet length shown in Table 1 to obtain fiber-reinforced resin pellets. In the obtained fiber-reinforced resin pellets, it was confirmed that the number-average fiber length of glass fibers was equal to the pellet length. The pellet thickness was set to 1.60 mm.

### Pellet molding conditions

- Die: Attached to the tip of a 50 mmϕ extruder, and four rods were linearly placed in the impregnation section.
- Preheating temperature: 200°C
- Melting temperature: 300°C
- Rod: "6 mm (diameter) ×3 mm (length)" × 4

Here, the "preheating temperature" is the temperature of glass fibers immediately before being introduced into the die. The "melting temperature" is the temperature of the resin in the die.

### [Mixed pellets]

### (1) Preparation of resin composition for dilution

To 100 parts by mass of SPS ("Zarec 300ZC" manufactured by Idemitsu Kosan Co.,Ltd., MFR value: 30 g/10min), 2.5 parts by mass of a crystallization nucleating agent ("Adecastab NA-70" manufactured by ADEKA Co., Ltd.; s phosphate ester-based compound), and 0.3 parts by mass of an antioxidant ("Irganox1010" manufactured by BASF Japan Co., Ltd.) were mixed to obtain a resin composition for dilution.

### (2) Molding of thermoplastic resin pellets (pellet for dilution)

The resin composition for dilution obtained above was melt-kneaded using a twin-screw kneading extruder ("TEM26SS" manufactured by Toshiba Machine Co.,Ltd.) at 320°C to produce thermoplastic resin pellets. The thermoplastic resin pellets do not contain reinforcing fibers such as glass fibers and the like.

### (3) Mixing of pellets

The fiber-reinforced resin pellets and the thermoplastic resin pellets were mixed at the ratios shown in Table 1 to obtain mixed pellets (raw materials of injection-molded articles)

### [Injection-molded article]

The mixed pellets obtained above were supplied to an injection molding machine and injection-molded to produce an injection-molded article. Specifically, using an injection molding machine ("180AD" manufactured by The Japan Steel Works, Ltd.), from the mixed pellets described above, a flat plate-shaped injection-molded article of 140 mm×140 mm×3 mm was produced. In this injection molding machine, a film-gate was used as the mold, and a full-flight screw was used as the screw. And, the molding was carried out under the condition of back pressure of 4 MPa, resin temperature of 320°C, and mold temperature of 150°C.

**Table 1**

| | | | Example 1 | Example 2 | Comp. Ex. 1 | Comp. Ex. 2 |
|---|---|---|---|---|---|---|
| Base resin composition | SPS | % by mass | 95.7 | 95.7 | 95.7 | 95.7 |
| | acid-modified polyphenylene ether | % by mass | 3.5 | 3.5 | 3.5 | 3.5 |
| | antioxidant | % by mass | 0.8 | 0.8 | 0.8 | 0.8 |
| Fiber-reinforced resin pellet | base resin composition | parts by mass | 100 | 100 | 100 | 100 |
| | glass fiber (roving) | parts by mass | 100 | 100 | 100 | 100 |
| | content ratio of thermoplastic resin and glass fibers | % by mass : % by mass | 49.8:50.2 | 49.8:50.2 | 49.8:50.2 | 49.8:50.2 |
| | pellet length | mm | 4.0 | 4.0 | 8.0 | 12.0 |
| | pellet thickness | mm | 1.6 | 1.6 | 1.6 | 1.6 |
| | number-average fiber length of glass fibers | mm | 4.0 | 4.0 | 8.0 | 12.0 |
| Resin composition for dilution | SPS | parts by mass | 100 | 100 | 100 | 100 |
| | crystallization nucleating agent | parts by mass | 2.5 | 2.5 | 2.5 | 2.5 |
| | antioxidant | parts by mass | 0.3 | 0.3 | 0.3 | 0.3 |
| Thermoplastic resin pellet (pellet for dilution) | resin composition for dilution | parts by mass | 100 | 100 | 100 | 100 |
| Mixed pellet (raw material of injection-molded article) | fiber-reinforced resin pellet | % by mass | 60 | 40 | 60 | 60 |
| | thermoplastic resin pellet | % by mass | 40 | 60 | 40 | 40 |
| Content of glass fibers in the injection-molded article | | % by mass | 30 | 20 | 30 | 30 |

### 2. Comparative Examples 3 to 4

### (1) Preparation of the base resin composition

SPS ("ZAREC 130ZC" manufactured by Idemitsu Kosan Co.,Ltd., MFR value: 15 g/10min), a rubber-like elastic body ("Septon8006"; SEBS" manufactured by KURARAY CO.,LTD), an acid-modified polyphenylene ether ("CX-1" manufactured by Idemitsu Kosan Co.,Ltd. ; fumaric acid-modified), an antioxidant ("Irganox1010" manufactured by BASF Japan Co., Ltd.), and a crystallization nucleating agent ("Adecastab NA-70" manufactured by ADEKA CORPORATION; phosphate ester-based compound") were mixed in the blending amounts shown in Table 2 to obtain a base resin composition. Here, parts by mass of the acid-modified polyphenylene ether, the antioxidant, and the crystallization nucleating agent shown in Table 2 is a value relative to 100 parts by mass of the total amount of SPS and the rubber-like elastic body.

### (2) Molding of fiber-reinforced resin pellets

Fiber-reinforced resin pellets (pellet length: 3.0 mm, pellet thickness: 2.00 mm) were produced by blending 100 parts by mass of the base resin composition obtained above with 30.0 parts by mass of glass fibers ("T480" manufactured by Nippon Electric Glass Company, Limited, chopped strand) having an average fiber diameter of 13 µm, which were cut in advance to a fiber length of 3 mm, and melt-extruding the base resin composition at 320°C using a twin-screw kneading extruder ("TEM26SS," manufactured by Toshiba Machine Co., Ltd.). Since glass fibers were fractured by kneading in a twin-screw kneading extruder, the number-average fiber length of glass fibers contained in the fiber-reinforced resin pellets was 380 to 400 µm.

### [Injection-molded article]

The fiber-reinforced resin pellets obtained above were supplied to an injection molding machine in the same manner as in Examples 1, 2 and Comparative Examples 1, 2 to be injection-molded, thereby producing an injection-molded article. In Comparative Examples 3 and 4, and Comparative Example 5 described below, the fiber-reinforced resin pellets are used alone without diluting with the pellets for dilution.

**Table 2**

| | | | Comp. Ex. 3 | Comp. Ex. 4 |
|---|---|---|---|---|
| Base resin composition | SPS | % by mass | 90.0 | 100 |
| | rubber-like elastic body | % by mass | 10.0 | - |
| | acid-modified polyphenylene ether | parts by mass | 2.0 | 2.0 |
| | antioxidant | parts by mass | 0.60 | 0.60 |
| | crystallization nucleating agent | parts by mass | 1.0 | 1.0 |
| Pellet (raw material of injection-molded article) | base resin composition | parts by mass | 70.0 | 70.0 |
| | glass fiber (chopped strand) | parts by mass | 30.0 | 30.0 |
| | pellet length | mm | 3.0 | 3.0 |
| | pellet thickness | mm | 2.00 | 2.00 |
| | number-average fiber length of glass fibers | µm | 380 | 400 |

### 3. Comparative Example 5

A commercially available fiber-reinforced resin pellets ("A504X90" manufactured by Toray Industries, Inc., base resin composition: polyphenylene sulfide (abbreviation "PPS"), glass fiber content: 40% by mass, pellet length: 3.0 µm, pellet thickness: 2.00 µm, number-average fiber length of glass fibers: 380 µm) was supplied to an injection molding machine in the same manner as in Examples 1 and 2 and Comparative Examples 1 and 2 to produce an injection-molded article. In Comparative Example 5, the fiber-reinforced resin pellets are used alone without diluting with the pellets for dilution.

### 4. Evaluation method

Using the mixed pellets obtained in Examples and Comparative Examples, test pieces were prepared and evaluated for the following points. The test pieces were prepared using an injection molding machine ("180AD" manufactured by The Japan Steel Works, Ltd.) under the following measuring methods: back pressure 4 MPa, resin temperature 320°C, and mold temperature 150°C.

### (1) Density

Density was measured in accordance with ISO 1183 (1987).

### (2) Load-deflection temperature

Load-deflection temperature was measured in accordance with ISO 75A (2004).

### (3) Creep deformation

Test pieces of the shape of ISO 527-2 1A were prepared and subjected to tensile creep test under the following conditions to determine the creep deformation (%).

### Tensile creep test

- Test item: tensile creep strain (calculated from the distance between chucks)
- Test shape: shape of ISO 527-2 1A
- Test conditions: distance between chucks; 115 mm ·Initial strain measurement; corrected by strength measurement using a universal material tester
- Test stress: 20 MPa
- Test temperature: (140±3)°C
- Test time: 1000 hours
- Number of tests: n=2
- Test apparatus: universal creep tester 250kgf type
- Linear variable differential transformer: DTH-A-30 manufactured by Kyowa Electronic Instruments CO., LTD.

### (4) LLC (long life coolant) resistance (tensile strength retention after immersion)

The test piece (3 mm thick) was immersed in an automotive antifreeze solution (ethylene glycol: water = 1 : 1) at 120°C for 1000 hours, left at room temperature, and then subjected to a tensile test at a tensile speed of 5 mm/min at 120°C in accordance with ISO 527-1,-2 (2012), and the tensile strength was measured. As the tensile strength retention rate (%) after immersion, the ratio of the tensile strength measured after immersion for 1000 hours to the tensile strength measured before immersion was determined.

### (5) Charpy impact resistance strength

Charpy impact resistance strength was measured in accordance with ISO 179 (2010).

In Examples 1 and 2 and Comparative Examples 1 and 2, test pieces were produced under the condition where no back pressure was applied during injection molding (back pressure 0 MPa) and the condition of applying a back pressure of 4 MPa during injection molding. Charpy impact resistance strength for each of the test piece was measured, then the difference (Charpy impact resistance strength of the back pressure 0 MPa - the Charpy impact resistance strength of the back pressure 4 MPa) was determined.

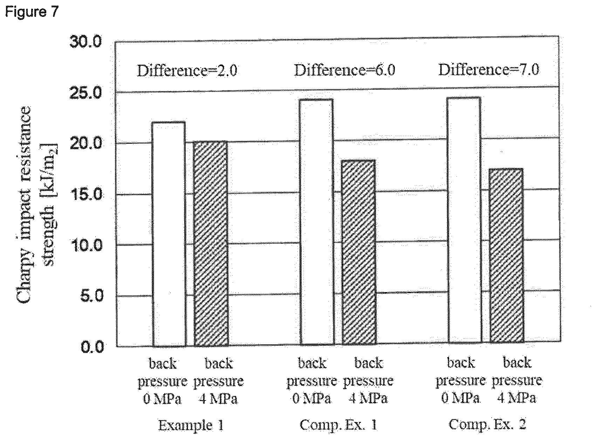

The above results are shown in Table 3. In addition, for Example 1 and Comparative Examples 1 and 2 (in which the content of glass fibers in the injection-molded article is 30% by mass in common), a Charpy impact resistance strength and a difference thereof are graphed in Fig. 7.

**Table 3**

| | | | Example 1 | Example 2 | Comp. Ex. 1 | Comp. Ex. 2 | Comp. Ex. 3 | Comp. Ex. 4 | Comp. Ex. 5 |
|---|---|---|---|---|---|---|---|---|---|
| Evaluation | Density | g/cm³ | 1.27 | 1.20 | 1.27 | 1.27 | 1.25 | 1.25 | 1.67 |
| | Load deflection temperature | °C | 265 | 264 | 265 | 266 | 247 | 250 | 262 |
| | Creep deformation | % | 0.2 | - | - | - | fructured | fructured | 0.3 |
| | LLC resistance (tensile strength retention after immersion) | % | 90.0 | - | - | - | - | - | 82.0 |
| | Charpy Impact resistance strength (back pressure 0 MPa) | kJ/m² | 22.0 | 17.0 | 24.0 | 24.0 | - | - | - |
| | Charpy impact resistance strength (back pressure 4 MPa) | kJ/m² | 20.0 | 17.0 | 18.0 | 17.0 | 11.6 | 9.0 | 11.4 |
| | Difference between the Charpy Impact resistance strengths (back pressure 0 MPa- 4 MPa) | kJ/m² | 2.0 | 0.0 | 6.0 | 7.0 | - | - | - |

### 5. Evaluation

From Tables 3 and Fig. 7, it can be seen that, in Examples 1 and 2 in which injection molding was performed using the fiber-reinforced resin pellets containing the thermoplastic resin (A) containing SPS and glass fibers (B) having a number-average fiber length of 1 mm or more and 7 mm or less, an injection-molded article having excellent impact resistance strength (Charpy impact resistance strength) can be obtained stably in contrast to Comparative Examples 1 to 5, regardless of fluctuations in molding conditions (back pressure) at the time of injection molding. Further, it can be seen that such an effect is exhibited while retaining good low density that contribute to weight reduction, heat resistance (high load-deflection temperature), low creep deformation, and high LLC (long life coolant) resistance.

### Industrial Applicability

The fiber-reinforced resin pellets and the mixed pellets of the invention can be used, for example, in raw material of a resin molded article, particularly an injection-molded article, and an injection-molded article molded using the fiber-reinforced resin pellets and the mixed pellets of the invention can be suitably applied to various applications such as automotive components in particular.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. A fiber-reinforced resin pellet comprising a thermoplastic resin (A) comprising crystalline polystyrene having a syndiotactic structure, and
glass fibers (B) having a number-average fiber length of 1 mm or more and 7 mm or less.

2. The fiber-reinforced resin pellet according to claim 1, wherein a pellet length of the fiber-reinforced resin pellet is 1 mm or more and 7 mm or less.

3. The fiber-reinforced resin pellet according to claim 1 or 2, wherein an MFR value of the crystalline polystyrene having the syndiotactic structure contained in the thermoplastic resin (A) is 10 to 50 g/10min.

4. The fiber-reinforced resin pellet according to any one of claims 1 to 3, wherein the MFR value of the thermoplastic resin (A) is 10 to 50 g/10min.

5. The fiber-reinforced resin pellet according to any one of claims 1 to 4, wherein the content of the crystalline polystyrene having the syndiotactic structure is 20% by mass or more and 99% by mass or less, when the total amount of the thermoplastic resin (A) is 100% by mass.

6. The fiber-reinforced resin pellet according to any one of claims 1 to 5, wherein the thermoplastic resin (A) compirses a crystalline polystyrene having the syndiotactic structure and an acid-modified polyphenylene ether.

7. The fiber-reinforced resin pellet according to any one of claims 1 to 6, wherein the average fiber diameter of the glass fibers (B) is 5 µm or more and 20 µm or less.

8. The fiber-reinforced resin pellet according to any one of claims 1 to 7, wherein the content of the thermoplastic resin (A) is 30% by mass or more and 90% by mass or less, and the content of the glass fibers (B) is 10% by mass or more and 70% by mass or less, when the total amount of the thermoplastic resin (A) and the glass fibers (B) is 100% by mass.

9. A mixed pellet obtained by mixing a thermoplastic resin pellet into the fiber-reinforced resin pellet according to any one of claims 1 to 8.

10. The mixed pellet according to claim 9, wherein the thermoplastic resin pellet comprises at least one of crystalline polystyrene having a syndiotactic structure and polyphenylene ether.

11. An injection-molded article obtained by injection-molding the fiber-reinforced resin pellet according to any one of claims 1 to 8 or the mixed pellet according to claim 9 or 10.

12. The injection-molded article according to claim 11, wherein the load-deflection temperature defined by ISO 75A (2004) is 260°C or higher.

13. The injection-molded article according to claim 11 or 12, wherein the content of the glass fibers (B) contained in the injection-molded article is 10% by mass or more and 60% by mass or less.
